# EUROPEAN PATENT APPLICATION

(11) **EP 4 738 032 A1**
(43) Date of publication of application: **06.05.2026**
(21) Application number: 24831424.7
(22) Date of filing: 09.05.2024
(51) Int. Cl.: G05B 19/406, G05B 19/18, G05B 19/4061, G05B 19/4063, G05B 19/4155

(54) **VISUALIZATION DEVICE, PROCESSING SYSTEM, VISUALIZATION METHOD, AND VISUALIZATION PROGRAM**

(30) Priority: 29.06.2023 JP 2023107419
(71) Applicant: Murata Machinery, Ltd., Kyoto-shi, Kyoto 601-8326 (JP)
(72) Inventor: KAWAI, Hidetsugu, Kyoto-shi, Kyoto 612-8686 (JP)
(74) Representative: Weickmann & Weickmann PartmbB
(86) International application number: PCT/JP2024/017297
(87) International publication number: WO 2025/004551

(57) **Abstract**

[Problem]

General visualization methods mainly focus on enabling the understanding of the status of a machine tool, the number of products produced, and the occurrence of anomalies, but do not enable the understanding of cutting resistance received by the tool for each machined portion of the workpiece.

[Means to Solve Problem]

A visualizer includes a data acquirer that acquires data from a machine tool. The visualizer includes a renderer that renders an image showing a shape of the workpiece and displays it on a display device. The data acquirer acquires first data that enables identification of a position of a tool during machining, and second data that indicates load currents of a feed axis motor and a spindle motor during machining.

The renderer renders the image showing the shape of the workpiece on the basis of the first data. The renderer varies the display mode in the image between a first machined portion and a second machined portion where cutting resistance received by the tool, estimated on the basis of the second data, differs.

## Description

### Technical Field

The present invention relates to a visualizer, a machining system, a visualization method, and a visualization program.

### Background Art

The status of machining performed on a workpiece by a machine tool has conventionally been checked by methods such as checking the finished product or checking the sound or vibration during machining. However, even skilled operators often find it difficult to detect abnormalities based solely on sound or vibration during machining.

A sensor-equipped tool with a sensor mounted on it is anticipated as a tool for monitoring the machining status of a workpiece (for example, see Patent Literature 1).

The state display method disclosed in Patent Literature 1 transforms information related to various states such as the machining state of a workpiece into visual representations, including graphical changes in shape or facial expressions, graphical changes in color, or a combination of graphical and color changes. According to the state display method disclosed in Patent Literature 1, the operator can intuitively understand information related to various states.

### Citation List

### Patent Literature

[Patent Literature 1] Japanese Unexamined Patent Application, First Publication No. H10-83209

### Summary of Invention

### Technical Problem

When a workpiece is machined to have multiple machined portions having different shapes, the cutting resistance received by the tool may vary depending on the shape of each machined portion. General visualization methods mainly focus on enabling the understanding of the state of a machine tool, the number of products produced, and the occurrence of anomalies, but do not enable the understanding of cutting resistance received by the tool for each machined portion of the workpiece.

### Means for Solving Problem

A first aspect of the present invention is a visualizer that visualizes a machining status of a workpiece. The visualizer includes a data acquirer that acquires data from a machine tool. The visualizer includes a renderer that renders an image showing a shape of the workpiece and displays it on a display device. The data acquirer acquires first data that enables identification of a position of a tool during machining, and second data that indicates load currents of a feed axis motor and a spindle motor during machining. The renderer renders the image on the basis of the first data. The renderer varies the display mode in the image between a first machined portion and a second machined portion where cutting resistance received by the tool, estimated on the basis of the second data, differs.

A second aspect of the present invention is a machining system including a machine tool that machines a workpiece. The machining system including a machine tool that machines a workpiece. The machining system includes a visualizer that visualizes a machining status of the workpiece. The visualizer includes a data acquirer that acquires data from a machine tool. The visualizer includes a renderer that renders an image showing a shape of the workpiece and displays it on a display device. The data acquirer acquires first data that enables identification of a position of a tool during machining, and second data that indicates load currents of a feed axis motor and a spindle motor during machining. The renderer renders the image on the basis of the first data. The renderer varies the display mode in the image between a first machined portion and a second machined portion where cutting resistance received by the tool, estimated on the basis of the second data, differs.

A third aspect of the present invention is a visualization method for visualizing a machining status of a workpiece. The visualization method includes acquiring data from a machine tool. The visualization method includes rendering an image showing a shape of the workpiece and displays it on a display device. In the visualization method, first data that enables identification of a position of a tool during machining, and second data that indicates load currents of a feed axis motor and a spindle motor during machining are acquired. In the visualization method, the image is rendered on the basis of the first data. In the visualization method, a display mode is varied in the image between a first machined portion and a second machined portion where cutting resistance received by the tool, estimated on the basis of the second data, differs.

A fourth aspect of the present invention is a visualization program causing a computer to function as a visualizer that visualizes a machining status of a workpiece. The visualization program causes the computer to function as a data acquirer that acquires data from a machine tool. The visualization program causes the computer to function as a renderer that renders an image showing a shape of the workpiece and displays it on a display device. The data acquirer acquires first data that enables identification of a position of a tool during machining, and second data that indicates load currents of a feed axis motor and a spindle motor during machining. The renderer renders the image on the basis of the first data. The renderer varies the display mode in the image between a first machined portion and a second machined portion where cutting resistance received by the tool, estimated on the basis of the second data, differs.

### Advantageous Effects of the Invention

According to the above aspect of the present invention, an operator can understand the cutting resistance received by the tool for each machined portion of a workpiece based on the display mode of a rendered image.

In the above aspect, the renderer may vary the color in the image between a first machined portion and a second machined portion where the cutting resistance differs. According to such an aspect, the operator can understand the cutting resistance for each machined portion of a workpiece based on the color of a rendered image.

The renderer may vary the display mode in the image between a first machined portion and a second machined portion where a component force of the cutting resistance differs. According to such an aspect, the operator can understand the component force of the cutting resistance for each machined portion of a workpiece based on the color of a rendered image.

In the above aspect, the renderer may render a two-dimensional image showing a shape of the workpiece in response to a change in machining status. According to such an aspect, the operator can understand the cutting resistance for each machined portion of a workpiece almost in real time while machining.

In the above aspect, the operator may be able to set a frequency resolution for rendering the two-dimensional image. The renderer may render the two-dimensional image at a set frequency resolution. The renderer may vary the display mode in the image on the basis of the cutting resistance in a period corresponding to the set frequency resolution. According to such an aspect, even with a high sampling frequency for data acquisition, the operator can understand the cutting resistance for each machined portion on a workpiece by setting a desired frequency resolution.

In the above aspect, the visualizer may include a memory storage that stores data acquired by the data acquirer. The renderer may read out data stored in the memory storage and render a three-dimensional image showing a shape of the workpiece. According to such an aspect, the operator can three-dimensionally understand the cutting resistance for each machined portion of a workpiece.

In the above aspect, the renderer may render a first image showing a shape of a reference workpiece machined after a tool change and a second image showing a shape of a comparison-target workpiece. The renderer may vary the display mode in the second image on the basis of a relative value of the cutting resistance at a time of machining the comparison-target workpiece with respect to the cutting resistance at a time of machining the reference workpiece. According to such an aspect, the operator can relatively understand the cutting resistance for each machined portion at the time of machining the comparison-target workpiece, with respect to the cutting resistance at the time of machining the reference workpiece, on the basis of the display mode of the second image.

In the above aspect, the operator may be able to set a threshold value for expressing the cutting resistance. When the threshold value is set, the renderer may vary the display mode in the second image for a machined portion where the relative value is equal to or greater than the threshold value. According to such an aspect, even in a case where the difference in cutting resistance is difficult to discern for each machined portion of the workpiece, the operator can easily understand them by setting a threshold value.

In the above aspect, the operator may be able to set a resolution span for expressing the cutting resistance. When the resolution span is set, the renderer may vary the display mode in the image using the resolution span that has been set. According to such an aspect, even in a case where the difference in cutting resistance is difficult to discern for each portion of the workpiece, the operator can easily understand them by setting a resolution span.

In the above aspect, the visualizer may include a machining program display processor that causes the display device to display a machining program in which codes are written for causing the machine tool to perform machining. The operator may be able to select an arbitrary code from the codes written in the machining program displayed on the display device. When the arbitrary code is selected, the renderer may display in a highlighted manner a machined portion machined by the selected code. According to the above aspect of the present invention, the operator can understand the cutting resistance for the machined portion that corresponds to a desired code.

In the above aspect, the visualizer may include a machining program display processor that causes the display device to display a machining program in which codes are written for causing the machine tool to perform machining. The operator may be able to select an arbitrary machined portion in the image. When the arbitrary machined portion is selected, the machining program display processor may display in a highlighted manner a code for machining the selected machined portion. According to the above aspect of the present invention, the operator can check the code with respect to a desired machined portion.

It should be noted that the above summary of the invention does not necessarily describe all necessary features of the present invention but that the invention may also reside in a sub-combination of the described features.

### Brief Description of the Drawings

Fig. 1 is a diagram showing an example of a system configuration of a cutting machining system 100.
Fig. 2 is a diagram showing an example of a device configuration of a visualizer 120.
Fig. 3 is a diagram showing an example of the shape of a workpiece after machined by a numerical control machine tool 110.
Fig. 4 is a flowchart showing an example of processing performed by the visualizer 120.
Fig. 5 is a diagram showing an example of a two-dimensional image rendered by the process shown in Fig. 4.
Fig. 6 is a diagram showing an example of a two-dimensional image rendered by the process shown in Fig. 4.
Fig. 7 is a diagram showing an example of a two-dimensional image rendered by the process shown in Fig. 4.
Fig. 8 is a flowchart showing an example of processing performed by the visualizer 120.
Fig. 9 is a diagram showing an example of a three-dimensional image rendered by the process shown in Fig. 8.
Fig. 10 is a flowchart showing an example of processing performed by the visualizer 120.
Fig. 11 is a diagram showing an example of a three-dimensional image colored by the process of Step S204 shown in Fig. 10.
Fig. 12 is a diagram showing an example of a three-dimensional image colored by the process of Step S303 shown in Fig. 10.
Fig. 13 is a flowchart showing an example of processing performed by the visualizer 120.
Fig. 14 is a diagram showing an example of a three-dimensional image rendered by the process shown in Fig. 13.
Fig. 15 is a flowchart showing an example of processing performed by the visualizer 120.
Fig. 16 is a diagram showing an example of a three-dimensional image colored by the process of Step S502 shown in Fig. 15.
Fig. 17 is a flowchart showing an example of processing performed by the visualizer 120.
Fig. 18 is a diagram showing an example of machined portions highlighted by the process of Step S704 shown in Fig. 17.
Fig. 19 is a flowchart showing an example of processing performed by the visualizer 120.
Fig. 20 is a diagram showing an example of a code being highlighted by the process of Step S702 shown in Fig. 19.

### Description of Embodiments

Hereinafter, the present invention will be described through an embodiment of the invention. However, the invention defined in the claims is not limited to the following embodiment, and not all combinations of features described in the embodiments are essential to the means by which the present invention solves the above problems. The same or similar members are denoted by the same reference signs, and redundant descriptions may be omitted.

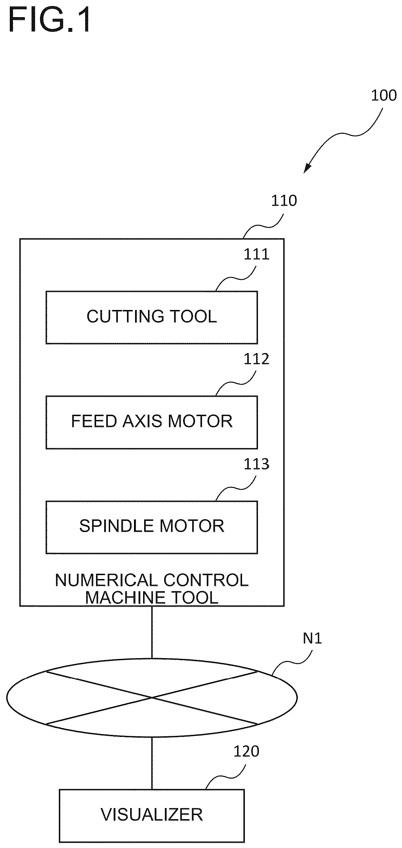

Fig. 1 is a diagram showing an example of a system configuration of a cutting machining system 100. The cutting machining system 100 is a system that performs cutting machining on a workpiece and visualizes the machining status. The cutting machining system 100 includes a numerical control machine tool 110 and a visualizer 120. The cutting machining system 100 is an example of a machining system. Cutting machining is an example of machining.

A numerical control machine tool 110 is a machine tool that controls the relative movement between a tool and a workpiece using numerical information such as position and speed, and executes a series of machining operations in accordance with programmed commands. The numerical control machine tool 110 includes a cutting tool 111, a feed axis motor 112, and a spindle motor 113. The feed axis motor 112 is a motor for moving a tool carriage that supports the cutting tool 111 in a direction parallel to the spindle. The spindle motor 113 is a motor for rotating the spindle that supports the workpiece. The numerical control machine tool 110 is communicatively connected to the visualizer 120 via a network N1. The network N1 is a computer network or communication network that connects multiple computers and electronic devices, enabling the exchange of signals, data, and information. The numerical control machine tool 110 is an example of a machine tool. The cutting tool 111 is an example of a tool.

The visualizer 120 is a computer that visualizes the machining status of a workpiece. The visualizer 120 is communicatively connected to the numerical control machine tool 110 via the network N1.

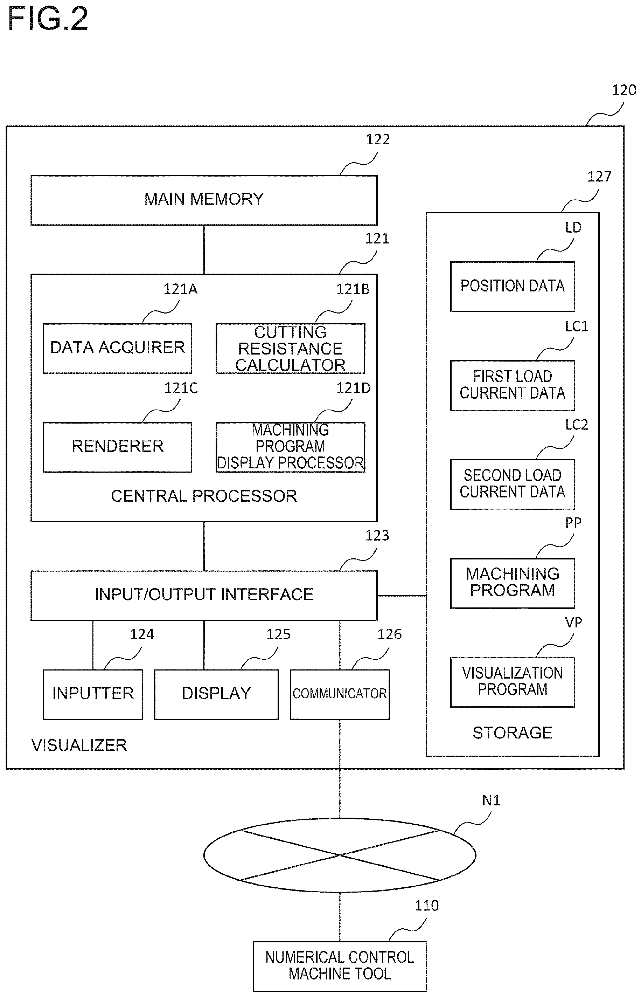

Fig. 2 is a diagram showing an example of a device configuration of the visualizer 120. The visualizer 120 includes a central processor 121, a main memory 122, an input/output interface 123, an inputter 124, a display 125, a communicator 126, and a storage 127.

The central processor 121 is a device that controls the main memory 122, the input/output interface 123, the inputter 124, the display 125, the communicator 126, and the storage 127, and performs data calculations and so forth.

The main memory 122 is one of the storage devices within the visualizer 120 that stores data and programs, and it is a storage device directly connected to the central processor 121 via electrical wiring or the like on a circuit board. The main memory 122 stores, for example, the program code currently being executed, data required for the current processing related to the processing of visualizing the machining status of a workpiece.

The input/output interface 123 is a hardware interface for inputting or outputting signals between the central processor 121 and the inputter 124, the display 125, the communicator 126, and the storage 127.

The inputter 124 is a device for inputting data, information, and instructions. The inputter 124 is used to provide, for example, data, information, and instructions related to visualizing the machining status of a workpiece.

The display 125 is a display device that projects an image by emitting light from its screen. The display 125 displays, for example, the machining status of a workpiece. The display 125 is an example of a display device.

The communicator 126 is a device that communicates with other devices using electricity, radio waves, or light. The visualizer 120 communicates with the numerical control machine tool 110 via the communicator 126.

The storage 127 is a device that permanently stores data. The storage 127 is an example of a storage device. The storage 127 stores first load current data LC1, second load current data LC2, a machining program PP, and a visualization program VP. The storage 127 is an example of a storage device. Position data LD, the first load current data LC1, and the second load current data LC2 are data acquired from the numerical control machine tool 110.

The position data LD is data that indicates the position of the cutting edge of the cutting tool 111 when machining is being performed. The position data LD is an example of first data that enables identification of the position of the tool when machining is being performed.

The first load current data LC1 is data that indicates the load current of the feed axis motor 112 when cutting is being performed. The second load current data LC2 is data that indicates the load current of the spindle motor 113 when cutting is being performed. The first load current data LC1 and the second load current data LC2 are examples of second data.

The machining program PP is a set of codes written for causing the numerical control machine tool 110 to perform machining.

The visualization program VP is a computer program that causes a computer to function as the visualizer 120. The visualization program VP is expressed as data in a certain format.

The central processor 121 reads, interprets, and executes the instructions written in the visualization program VP in sequence. The visualization program VP causes the central processor 121 to function as a data acquirer 121A, a cutting resistance calculator 121B, a renderer 121C, and a machining program display processor 121D.

The data acquirer 121A is a software module that acquires data from the numerical control machine tool 110. The data acquirer 121A acquires, for example, position data LD, first load current data LC1, and second load current data LC2.

The cutting resistance calculator 121B is a software module that calculates the cutting resistance received by the cutting tool 111 when cutting is being performed. The cutting resistance calculator 121B calculates the cutting resistance received by the cutting tool 111 on the basis of, for example, the first load current data LC1 and the second load current data LC2.

The cutting resistance calculator 121B calculates the component force of the cutting resistance received by the cutting tool 111 on the basis of, for example, the first load current data LC1 and the second load current data LC2.

The renderer 121C is a software module that renders an image showing the shape of the workpiece and displays it on the display 125. The renderer 121C renders the image on the basis of the position data LD. The renderer 121C varies the display mode in the image between a first machined portion and a second machined portion where the cutting resistance received by the cutting tool 111, estimated on the basis of the first load current data LC1 and the second load current data LC2, differs.

For example, the renderer 121C varies the color in the image between the first machined portion and the second machined portion where the cutting resistance received by the cutting tool 111 differs.

For example, the renderer 121C varies the display mode in the image between the first machined portion and the second machined portion where the component force of the cutting resistance received by the cutting tool 111 differs.

For example, the renderer 121C renders a two-dimensional image showing the shape of the workpiece in response to a change in the status of cutting machining. For example, the operator can set a frequency resolution for rendering a two-dimensional image, using the inputter 124. For example, the renderer 121C renders a two-dimensional image at the set frequency resolution. The renderer 121C varies the display mode in the image on the basis of the cutting resistance in a period corresponding to the set frequency resolution, for example.

The renderer 121C reads out, for example, the position data LD, the first load current data LC1, and the second load current data LC2 stored in the storage 127, and renders a three-dimensional image showing the shape of the workpiece.

For example, the renderer 121C renders a first image showing the shape of a reference workpiece machined after changing the cutting tool 111 and a second image showing the shape of a comparison target. For example, the renderer 121C varies the display mode in the second image on the basis of the relative value of the cutting resistance at the time of machining the comparison-target workpiece with respect to the cutting resistance at the time of machining the reference workpiece. For example, the operator can set a threshold value for expressing the cutting resistance, using the inputter 124. When the threshold value is set, the renderer 121C varies the display mode in the second image for the machined portion where the relative value is equal to or greater than the threshold value.

For example, the operator can set a resolution span for expressing the cutting resistance, using the inputter 124. When the resolution span is set, the renderer 121C varies the display mode in the image using the resolution span that has been set.

The machining program display processor 121D is a software module that causes the display 125 to display the machining program PP.

The operator can select an arbitrary code from the codes written in the machining program PP, using the inputter 124. When an arbitrary code is selected, the renderer 121C displays in a highlighted manner the machined portion machined by the selected code.

For example, the operator can select an arbitrary machined portion in the image, using the inputter 124. When an arbitrary machined portion is selected, the machining program display processor 121D displays in a highlighted manner the code for machining the selected machined portion.

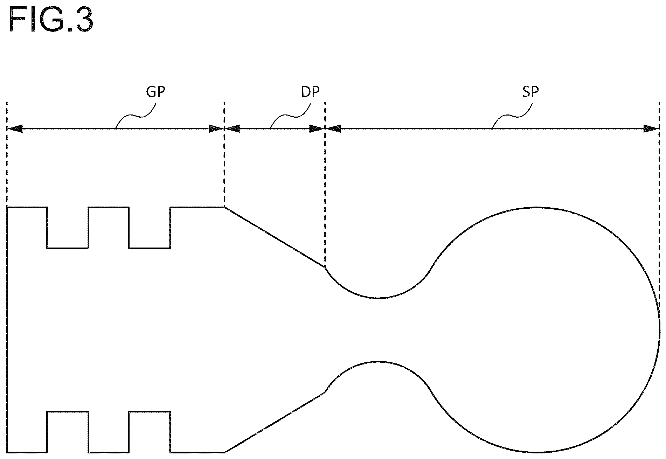

Fig. 3 is a diagram showing an example of the shape of a workpiece after machined by the numerical control machine tool 110. The workpiece shown in Fig. 3 is machined to form a spherical portion SP, an oblique portion DP, and a grooved portion GP.

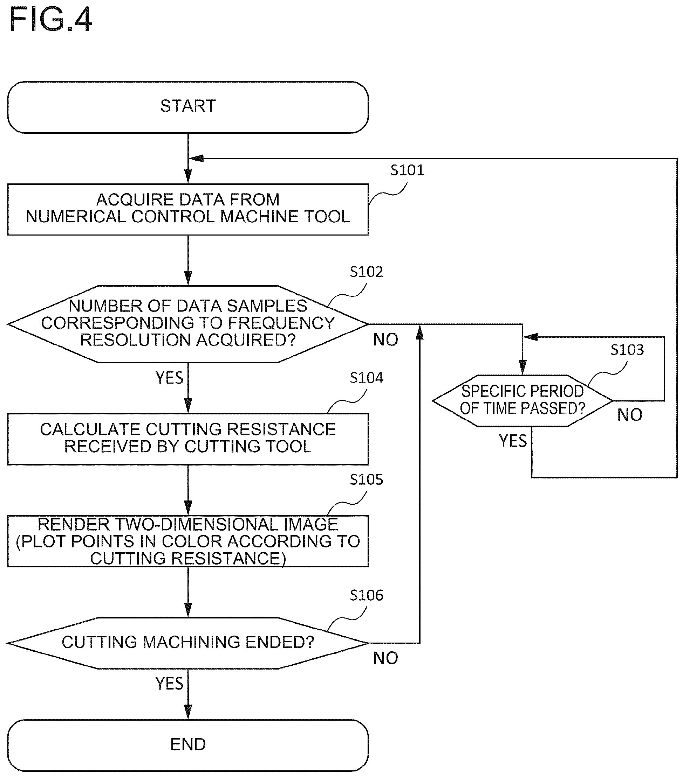

Fig. 4 is a flowchart showing an example of the processing performed by the visualizer 120. The flowchart shown in Fig. 4 relates to the process of rendering a two-dimensional image showing the shape of the workpiece so that the cutting resistance received by the cutting tool 111 can be recognized for each machined portion.

Once the numerical control machine tool 110 starts cutting the workpiece, an acceleration sensor mounted on the cutting tool 111 starts measuring the acceleration resulting from the cutting resistance. Similarly, once the numerical control machine tool 110 starts cutting the workpiece, a strain sensor mounted on the cutting tool 111 starts measuring the strain resulting from the cutting resistance. The numerical control machine tool 110 transmits first load current data LC1 indicating the load current of the feed axis motor 112 and second load current data LC2 indicating the load current of the spindle motor 113 to the visualizer 120. When transmitting the first load current data LC1 and the second load current data LC2, the numerical control machine tool 110 transmits the data together with position data LD indicating the position of the cutting edge of the cutting tool 111 at the time of measuring the load current. The numerical control machine tool 110 transmits the first load current data LC1, the second load current data LC2, and the position data LD at predetermined short time intervals.

The data acquirer 121A acquires data transmitted from the numerical control machine tool 110 (Step S101). In Step S101, the data acquirer 121A acquires data transmitted from the numerical control machine tool 110 at specific time intervals at a predetermined sampling frequency. Upon acquiring the data transmitted from the numerical control machine tool 110, the data acquirer 121A stores the acquired data in the storage 127.

Next, the data acquirer 121A determines whether it has acquired a number of data samples corresponding to the set frequency resolution (Step S102). As described above, the frequency resolution is set by the operator, for example.

If the number of data samples corresponding to the frequency resolution is determined in Step S102 as not having been acquired (S102; NO), the data acquirer 121A determines whether a specific period of time has passed since the last data acquisition (Step S103).

If the specific period of time is determined in Step S103 as not having passed (S103; NO), the data acquirer 121A waits until the specific period of time has passed.

If the specific period of time is determined in Step S103 as having passed (Step S103; YES), the data acquirer 121A re-executes the process of Step S101.

If the number of data samples corresponding to the frequency resolution is determined in Step S102 as having been acquired (S102; YES), the cutting resistance calculator 121B calculates the cutting resistance received by the cutting tool 111 (Step S104). In Step S104, the cutting resistance calculator 121B calculates the cutting resistance received by the cutting tool 111 on the basis of, for example, the first load current data LC1 and the second load current data LC2 of the number of sampling data corresponding to the frequency resolution. The cutting resistance calculator 121B, for example, calculates the component force of the cutting resistance received by the cutting tool 111.

The cutting resistance calculator 121B calculates the cutting resistance received by the cutting tool 111 on the basis of the first load current data LC1 and the second load current data LC2, every time data transmitted from the numerical control machine tool 110 is acquired, for example. Then, the cutting resistance calculator 121B, for example, considers the average value of the calculated multiple values to be the cutting resistance received by the numerical control machine tool 110 during the period corresponding to the frequency resolution.

The cutting resistance calculator 121B calculates the cutting resistance received by the cutting tool 111 on the basis of the first load current data LC1 and the second load current data LC2, every time data transmitted from the numerical control machine tool 110 is acquired, for example. Then, the cutting resistance calculator 121B, for example, considers the maximum value of the calculated multiple values to be the cutting resistance received by the numerical control machine tool 110 during the period corresponding to the frequency resolution.

The cutting resistance calculator 121B calculates the cutting resistance received by the cutting tool 111 on the basis of the first load current data LC1 and the second load current data LC2, every time data transmitted from the numerical control machine tool 110 is acquired, for example. Then, the cutting resistance calculator 121B, for example, considers the minimum value of the calculated multiple values to be the cutting resistance received by the numerical control machine tool 110 during the period corresponding to the frequency resolution.

Next, the renderer 121C renders a two-dimensional image showing the shape of the workpiece (Step S105). In Step S105, the renderer 121C plots points indicating the position coordinates of the cutting edge of the cutting tool 111 in a two-dimensional Cartesian coordinate system on the basis of, for example, the position data LD. The two-dimensional Cartesian coordinate system is, for example, a coordinate system in a cutting environment where the cutting depth direction is the X-axis and the Z-axis is the axial direction passing through the spindle. The renderer 121C plots points colored according to the cutting resistance calculated in Step S104, for example.

Next, the data acquirer 121A determines whether the cutting has ended (Step S106). In Step S106, the data acquirer 121A determines the cutting as having ended when, for example, data cannot be acquired from the numerical control machine tool 110 even after a predetermined period of time has passed.

If the cutting is determined in Step S106 as not having ended (S106; NO), the data acquirer 121A determines whether a specific period of time has passed since the last data acquisition (Step S103).

The central processor 121 repeatedly executes the processes from Step S101 to Step S106 until the cutting ends. By repeating the processes from Step S101 to Step S106, the locus of points plotted in Step S105 becomes a two-dimensional image showing the shape of the workpiece.

If the cutting is determined in Step S106 as having ended (S106; YES), the central processor 121 ends the process shown in Fig. 4.

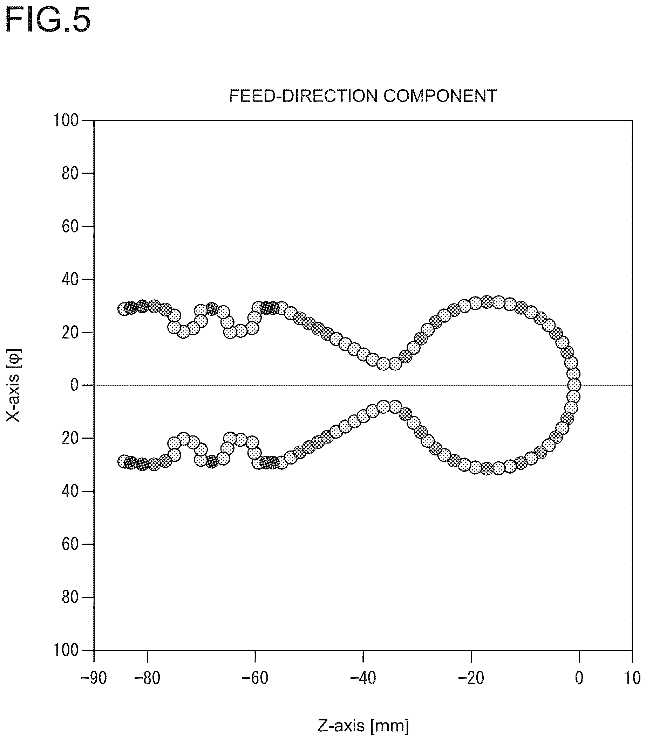

Fig. 5 to Fig. 7 are diagrams showing examples of two-dimensional images rendered by the process shown in Fig. 4.

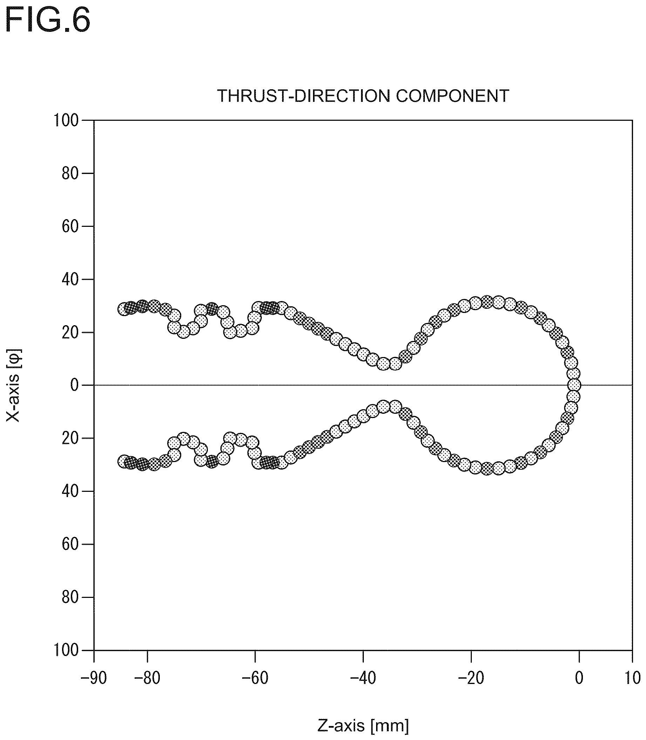

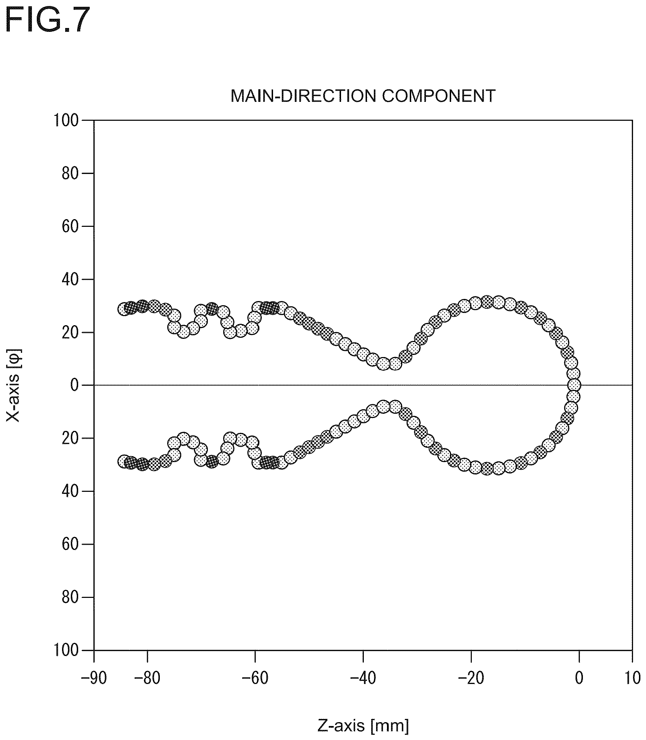

The two-dimensional image shown in Fig. 5 is rendered using multiple plotted points, each colored according to the feed-direction component of the cutting resistance received by the cutting tool 111. The two-dimensional image shown in Fig. 6 is rendered using multiple plotted points, each colored according to the thrust-direction component of the cutting resistance received by the cutting tool 111. The two-dimensional image shown in Fig. 7 is rendered using multiple plotted points, each colored according to the main-direction component of the cutting resistance received by the cutting tool 111. In Fig. 5 to Fig. 7, differences in the colors of the plotted points are represented by differences in the density of dot patterns. The cutting resistance received by the cutting tool 111 is smaller when the density of the dot pattern is lower, and larger when the density of the dot pattern is higher.

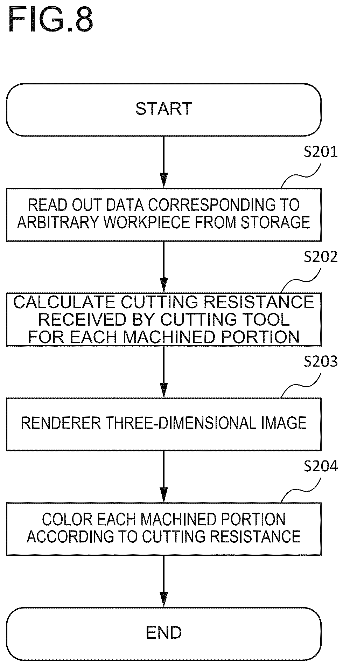

Fig. 8 is a flowchart showing an example of the processing performed by the visualizer 120. The flowchart shown in Fig. 8 relates to the process of rendering a three-dimensional image showing the shape of the workpiece so that the cutting resistance received by the cutting tool 111 can be recognized for each machined portion.

As described above, upon acquiring the data transmitted from the numerical control machine tool 110, the data acquirer 121A stores the acquired data in the storage 127. The operator can select a workpiece, from among already machined workpieces, for which a three-dimensional image is to be rendered.

The cutting resistance calculator 121B reads out the position data LD, the first load current data LC1, and the second load current data LC2 corresponding to the workpiece selected by the operator from the storage 127 (Step S201).

Next, the cutting resistance calculator 121B calculates the cutting resistance received by the cutting tool 111 for each machined portion (Step S202). In Step S202, the cutting resistance calculator 121B calculates the cutting resistance received by the cutting tool 111 for each machined portion, for example, on the basis of the first load current data LC1 and the second load current data LC2 read out in Step S201. The cutting resistance calculator 121B, for example, calculates the component force of the cutting resistance received by the cutting tool 111.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the average value of the calculated multiple values to be the cutting resistance received by the numerical control machine tool 110 at the corresponding machined portion.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the maximum value of the calculated multiple values to be the cutting resistance received by the numerical control machine tool 110 at the corresponding machined portion.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the minimum value of the calculated multiple values to be the cutting resistance received by the numerical control machine tool 110 at the corresponding machined portion.

Next, the renderer 121C renders a three-dimensional image showing the shape of the workpiece selected by the operator (Step S203). In Step S203, the renderer 121C, for example, renders the three-dimensional image on the basis of the position data LD read out in Step S201.

Next, the renderer 121C colors the three-dimensional image rendered in Step S203 for each machined portion on the basis of the cutting resistance received by the numerical control machine tool 110 (Step S204). In Step S204, the renderer 121C applies color in accordance with the cutting resistance calculated in Step S202.

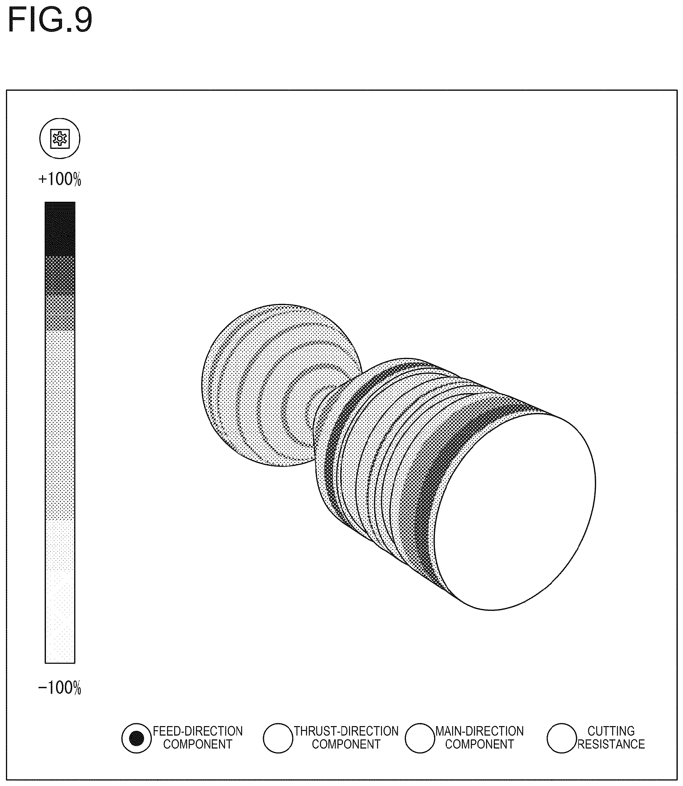

Fig. 9 is a diagram showing an example of a three-dimensional image rendered by the process shown in Fig. 8.

In the three-dimensional image shown in Fig. 9, each machined portion is colored according to the feed-direction component of the cutting resistance received by the cutting tool 111. In Fig. 9, the difference in color for each machined portion is represented by the density of dot patterns. The cutting resistance received by the cutting tool 111 is smaller when the density of the dot pattern is lower, and larger when the density of the dot pattern is higher.

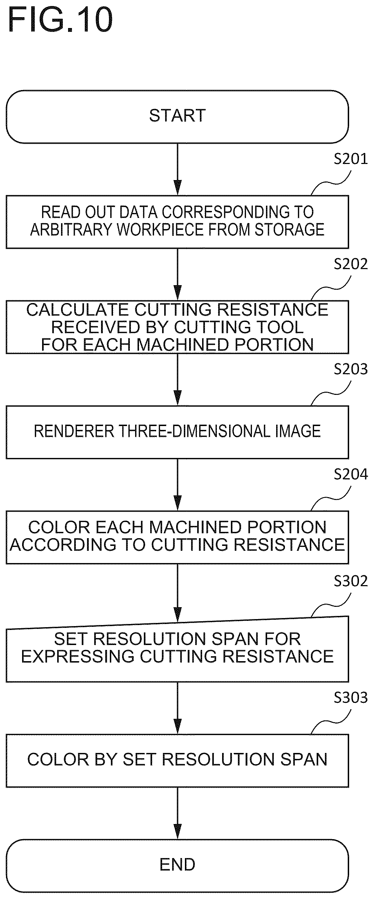

Fig. 10 is a flowchart showing an example of the processing performed by the visualizer 120. The flowchart shown in Fig. 8 relates to the process performed at the time of setting the resolution span for expressing cutting resistance. The processes from Step S201 to Step S204 in Fig. 10 relate to the processes from Step S201 to Step S204 in Fig. 8.

The cutting resistance calculator 121B reads out the position data LD, the first load current data LC1, and the second load current data LC2 corresponding to the workpiece selected by the operator from the storage 127 (Step S201).

Next, the cutting resistance calculator 121B calculates the cutting resistance received by the cutting tool 111 for each machined portion (Step S202).

Next, the renderer 121C renders a three-dimensional image showing the shape of the workpiece selected by the operator (Step S203).

Next, the renderer 121C colors the three-dimensional image rendered in Step S203 for each machined portion on the basis of the cutting resistance received by the numerical control machine tool 110 (Step S204).

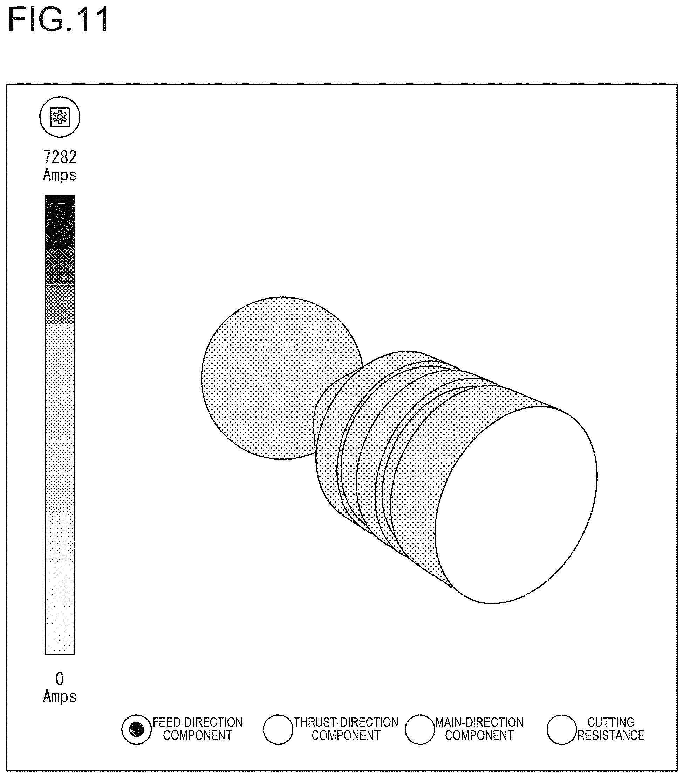

Fig. 11 is a diagram showing an example of a three-dimensional image colored by the process of Step S204 shown in Fig. 10.

In the three-dimensional image shown in Fig. 11, each machined portion is colored according to the feed-direction component of the cutting resistance received by the cutting tool 111. In Fig. 11, the difference in color for each machined portion is represented by the density of dot patterns. The cutting resistance received by the cutting tool 111 is smaller when the density of the dot pattern is lower, and larger when the density of the dot pattern is higher. The three-dimensional image shown in Fig. 11 expresses the cutting resistance received by the cutting tool 111 in a resolution span of 7282 (Amps). However, the three-dimensional image shown in Fig. 11 does not have an appropriate resolution span, making it difficult to recognize the color difference for each machined portion.

As described above, for example, the operator can set a resolution span for expressing the cutting resistance, using the inputter 124.

Once the resolution span is set (Step S302), the renderer 121C colors the three-dimensional image rendered in Step S203 for each machined portion using the set span (Step S303).

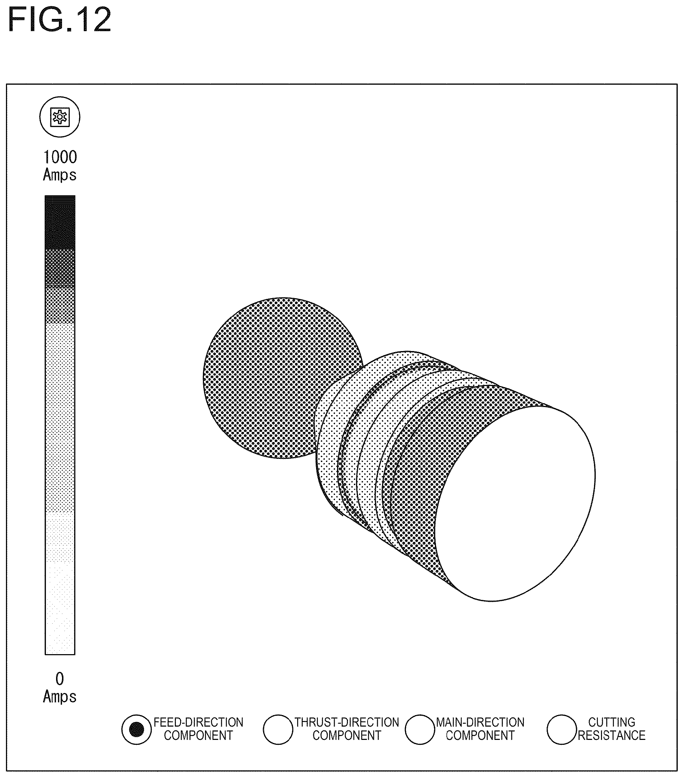

Fig. 12 is a diagram showing an example of a three-dimensional image colored by the process of Step S303 shown in Fig. 10.

In the three-dimensional image shown in Fig. 12, each machined portion is colored according to the feed-direction component of the cutting resistance received by the cutting tool 111. In Fig. 12, the difference in color for each machined portion is represented by the density of dot patterns. The cutting resistance received by the cutting tool 111 is smaller when the density of the dot pattern is lower, and larger when the density of the dot pattern is higher. The three-dimensional image shown in Fig. 12 expresses the cutting resistance received by the cutting tool 111 in a resolution span of 1000 (Amps). The three-dimensional image shown in Fig. 12 has an appropriate resolution span, making it easy to recognize the color difference for each machined portion.

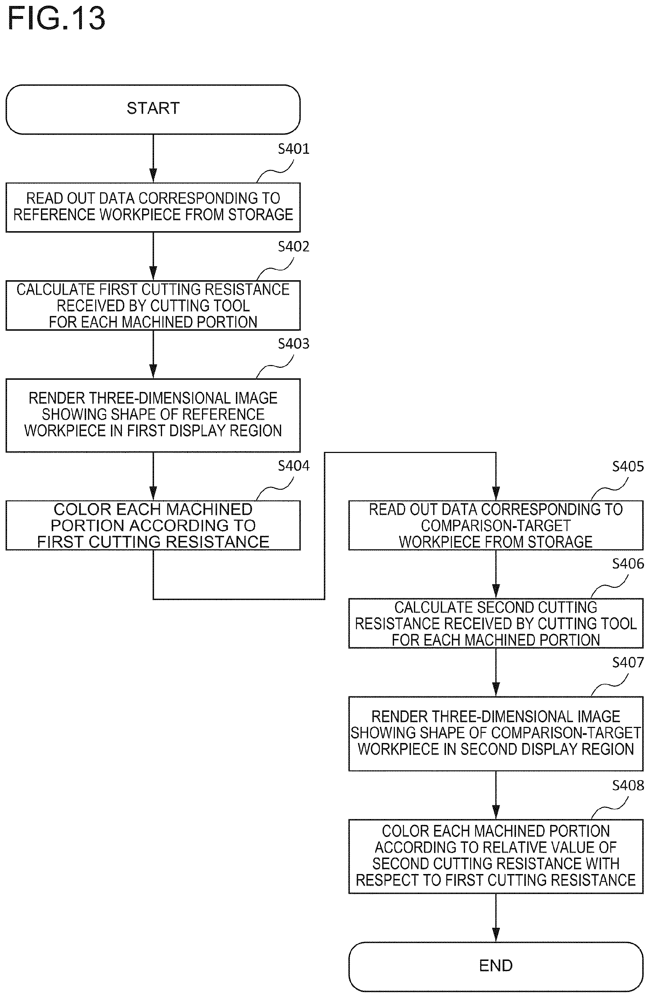

Fig. 13 is a flowchart showing an example of the processing performed by the visualizer 120. The flowchart shown in Fig. 13 relates to the process of rendering so that the cutting resistance at the time of machining a reference workpiece can be compared with the cutting resistance at the time of machining a comparison-target workpiece.

As described above, upon acquiring the data transmitted from the numerical control machine tool 110, the data acquirer 121A stores the acquired data in the storage 127. The operator can select a workpiece, from among already machined workpieces, for which a three-dimensional image is to be rendered. For example, the operator selects a workpiece that will be used as a reference when comparing cutting resistances, and a comparison-target workpiece.

The cutting resistance calculator 121B reads out the position data LD, the first load current data LC1, and the second load current data LC2 corresponding to the reference workpiece from the storage 127 (Step S401).

Next, the cutting resistance calculator 121B calculates a first cutting resistance received by the cutting tool 111 at the time of machining the reference workpiece (Step S402). In Step S402, the cutting resistance calculator 121B calculates the first cutting resistance for each machined portion, for example, on the basis of the first load current data LC1 and the second load current data LC2 read out in Step S401. The cutting resistance calculator 121B, for example, calculates the component force of the cutting resistance as the first cutting resistance.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the average value of the calculated multiple values to be the first cutting resistance applied to the numerical control machine tool 110 at the corresponding machined portion.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the maximum value of the calculated multiple values to be the first cutting resistance applied to the numerical control machine tool 110 at the corresponding machined portion.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the minimum value of the calculated multiple values to be the first cutting resistance applied to the numerical control machine tool 110 at the corresponding machined portion.

Next, the renderer 121C renders a three-dimensional image showing the shape of the reference workpiece in a first display region IF1 (Step S403). In Step S403, the renderer 121C, for example, renders the three-dimensional image on the basis of the position data LD read out in Step S401.

Next, the renderer 121C colors the three-dimensional image in the first display region IF1 for each machined portion according to the first cutting resistance (Step S404). In Step S404, the renderer 121C applies color in accordance with the first cutting resistance calculated in Step S402.

Next, the cutting resistance calculator 121B reads out the position data LD, the first load current data LC1, and the second load current data LC2 corresponding to the comparison-target workpiece from the storage 127 (Step S405).

Next, the cutting resistance calculator 121B calculates a second cutting resistance applied to the cutting tool 111 at the time of machining the comparison-target workpiece (Step S406). In Step S406, the cutting resistance calculator 121B calculates the second cutting resistance for each machined portion, for example, on the basis of the first load current data LC1 and the second load current data LC2 read out in Step S405. The cutting resistance calculator 121B, for example, calculates the component force of the cutting resistance as the second cutting resistance.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the average value of the calculated multiple values to be the second cutting resistance applied to the numerical control machine tool 110 at the corresponding machined portion.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the maximum value of the calculated multiple values to be the second cutting resistance applied to the numerical control machine tool 110 at the corresponding machined portion.

The cutting resistance calculator 121B, for example, calculates the cutting resistance received by the cutting tool 111 in the order that data is acquired from the numerical control machine tool 110, until a predetermined number of calculations is reached. Then, the cutting resistance calculator 121B, for example, considers the minimum value of the calculated multiple values to be the second cutting resistance applied to the numerical control machine tool 110 at the corresponding machined portion.

Next, the renderer 121C renders a three-dimensional image showing the shape of the comparison-target workpiece in a second display region IF2 (Step S407). In Step S407, the renderer 121C, for example, renders the three-dimensional image on the basis of the position data LD read out in Step S405.

Next, the renderer 121C colors the three-dimensional image in the second display region IF2 for each machined portion according to the relative value of the second cutting resistance with respect to the first cutting resistance (Step S408). In Step S408, the renderer 121C applies color in accordance with the relative value of the second cutting resistance calculated in Step S406 with respect to the first cutting resistance calculated in Step S402.

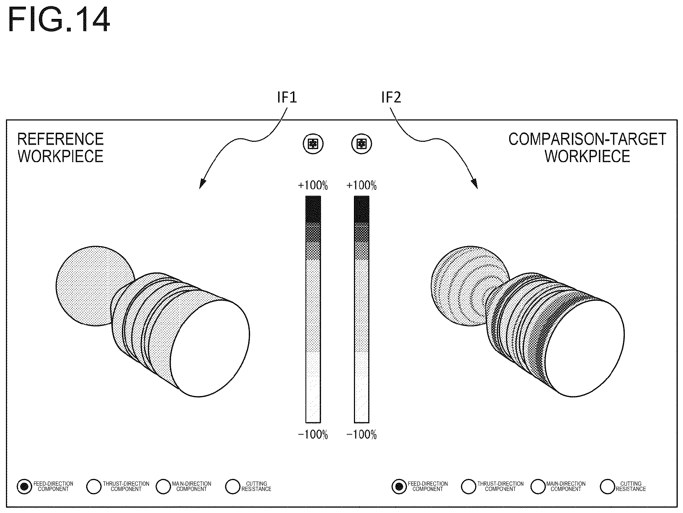

Fig. 14 is a diagram showing an example of a three-dimensional image rendered by the process shown in Fig. 13.

In the three-dimensional image shown in Fig. 14, each machined portion is colored according to the feed-direction component of the cutting resistance received by the cutting tool 111. In Fig. 14, the difference in color for each machined portion is represented by the density of dot patterns. The cutting resistance received by the cutting tool 111 is smaller when the density of the dot pattern is lower, and larger when the density of the dot pattern is higher.

The three-dimensional image in the first display region IF1 is a three-dimensional image showing the shape of the reference workpiece. The three-dimensional image in the second display region IF2 is a three-dimensional image showing the shape of the comparison-target workpiece. The three-dimensional image in the second display region IF2 is colored according to the relative value of the second cutting resistance at the time of machining the comparison-target workpiece with respect to the first cutting resistance at the time of machining the reference workpiece. Therefore, a machined portion in the three-dimensional image of the second display region IF2 that has the same color as a machined portion in the three-dimensional image of the first display region IF1 indicates that the relative value of the second cutting resistance with respect to the first cutting resistance has not changed. On the other hand, a machined portion in the three-dimensional image of the second display region IF2 that has a different color from a corresponding machined portion in the three-dimensional image of the first display region IF1 may be a portion that requires attention.

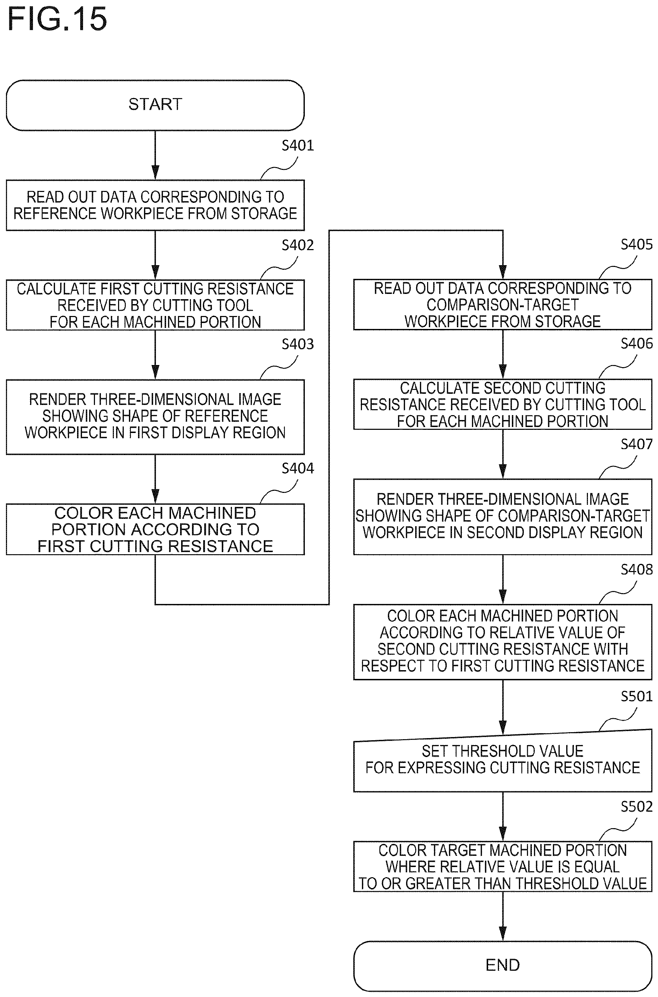

Fig. 15 is a flowchart showing an example of the processing performed by the visualizer 120. The flowchart shown in Fig. 15 relates to the process performed at the time of setting the threshold value for expressing cutting resistance. The processes from Step S401 to Step S408 in Fig. 15 are similar to those from Step S401 to Step S408 in Fig. 13.

As described above, upon acquiring the data transmitted from the numerical control machine tool 110, the data acquirer 121A stores the acquired data in the storage 127. The operator can select a workpiece, from among already machined workpieces, for which a three-dimensional image is to be rendered. For example, the operator selects a workpiece that will be used as a reference when comparing cutting resistances, and a comparison-target workpiece.

The cutting resistance calculator 121B reads out the position data LD, the first load current data LC1, and the second load current data LC2 corresponding to the reference workpiece from the storage 127 (Step S401).

Next, the cutting resistance calculator 121B calculates a first cutting resistance applied to the cutting tool 111 at the time of machining the reference workpiece (Step S402).

Next, the renderer 121C renders a three-dimensional image showing the shape of the reference workpiece in a first display region IF1 (Step S403).

Next, the renderer 121C colors the three-dimensional image in the first display region IF1 for each machined portion according to the first cutting resistance (Step S404).

Next, the cutting resistance calculator 121B reads out the position data LD, the first load current data LC1, and the second load current data LC2 corresponding to the comparison-target workpiece from the storage 127 (Step S405).

Next, the cutting resistance calculator 121B calculates a second cutting resistance applied to the cutting tool 111 at the time of machining the comparison-target workpiece (Step S406).

Next, the renderer 121C renders a three-dimensional image showing the shape of the comparison-target workpiece in a second display region IF2 (Step S407).

Next, the renderer 121C colors the three-dimensional image in the second display region IF2 for each machined portion according to the relative value of the second cutting resistance with respect to the first cutting resistance (Step S408).

As described above, for example, the operator can set a threshold value for expressing the cutting resistance, using the inputter 124.

Once the threshold value is set (Step S501), the renderer 121C colors the three-dimensional image in the second display region IF2 for the machined portion where the relative value of the second cutting resistance to the first cutting resistance is equal to or greater than the threshold value (S502).

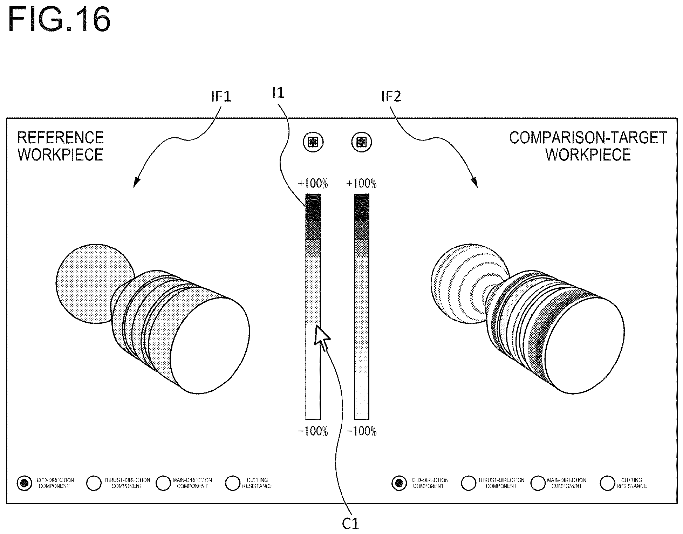

Fig. 16 is a diagram showing an example of a three-dimensional image colored by the process of Step S502 shown in Fig. 15.

In the three-dimensional image shown in Fig. 16, each machined portion is colored according to the feed-direction component of the cutting resistance received by the cutting tool 111. In Fig. 16, the difference in color for each machined portion is represented by the density of dot patterns. The cutting resistance received by the cutting tool 111 is smaller when the density of the dot pattern is lower, and larger when the density of the dot pattern is higher.

The three-dimensional image in the first display region IF1 is a three-dimensional image showing the shape of the reference workpiece. The three-dimensional image in the second display region IF2 is a three-dimensional image showing the shape of the comparison-target workpiece. The three-dimensional image in the second display region IF2 is colored according to the relative value of the cutting resistance at the time of machining the comparison-target workpiece with respect to the cutting resistance at the time of machining the reference workpiece.

In the example shown in Fig. 16, an indicator I1 indicates color indices for a three-dimensional image showing the shape of the reference workpiece. The operator uses the inputter 124, such as a pointing device, to position the cursor C1 at a desired position on the indicator I1 and clicks the pointing device. When the pointing device is clicked, the renderer 121C considers the cutting resistance corresponding to the color of the position on the indicator I1 indicated by the cursor C1 to be a threshold value. The renderer 121C then colors the three-dimensional image in the second display region IF2 for each machined portion where the relative value of the second cutting resistance with respect to the first cutting resistance is equal to or greater than the threshold value. In Fig. 16, portions with dot patterns are machined portions where the relative value of the second cutting resistance with respect to the first cutting resistance is equal to or greater than the threshold value, and this expresses that those portions are colored. On the other hand, white portions with no dot patterns are machined portions where the relative value of the second cutting resistance with respect to the first cutting resistance is less than the threshold value, and this expresses that those portions are not colored.

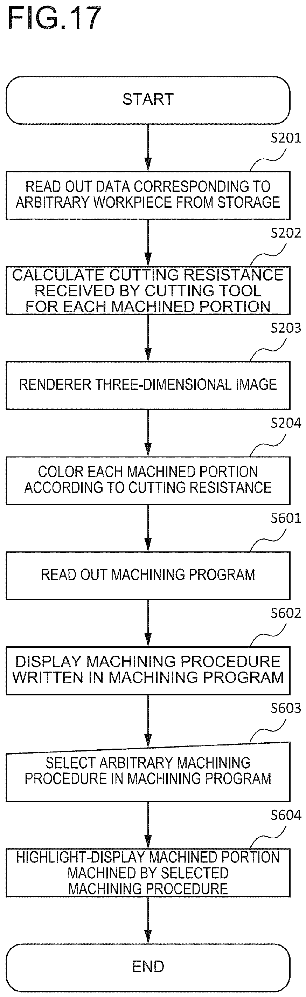

Fig. 17 is a flowchart showing an example of the processing performed by the visualizer 120. The flowchart shown in Fig. 17 relates to the process of displaying the machining program PP along with a three-dimensional image that represents cutting resistance, and the process performed when an arbitrary code in the machining program PP is selected. The processes from Step S201 to Step S204 in Fig. 17 are similar to those from Step S201 to Step S204 in Fig. 8.

The cutting resistance calculator 121B reads out the position data LD, the first load current data LC1, and the second load current data LC2 corresponding to the workpiece selected by the operator from the storage 127 (Step S201).

Next, the cutting resistance calculator 121B calculates the cutting resistance received by the cutting tool 111 for each machined portion (Step S202).

Next, the renderer 121C renders a three-dimensional image showing the shape of the workpiece selected by the operator (Step S203).

Next, the renderer 121C colors the three-dimensional image rendered in Step S203 for each machined portion on the basis of the cutting resistance received by the numerical control machine tool 110 (Step S204).

Next, the machining program display processor 121D reads out the machining program PP from the storage 127 (Step S601), and displays the codes written in the machining program PP on the display 125 (Step S602). In Step S602, the machining program display processor 121D, for example, displays the procedure described in the machining program PP in the vicinity of the three-dimensional image rendered in Step S203.

As described above, the operator can select an arbitrary code from the codes written in the machining program PP, using the inputter 124.

When an arbitrary code is selected (Step S603), the renderer 121C displays in a highlighted manner the machined portion machined by the selected code (Step S604).

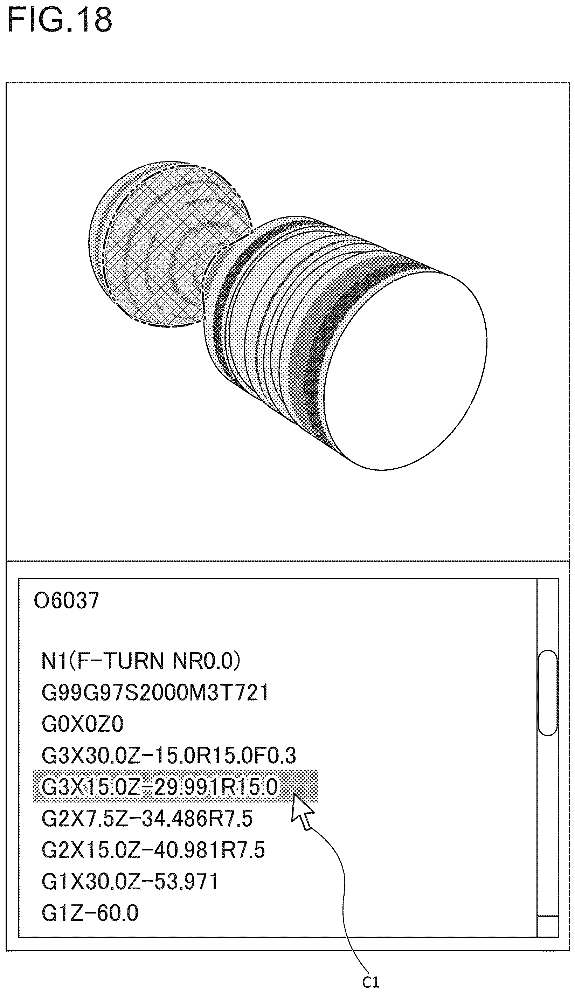

Fig. 18 is a diagram showing an example of machined portions highlighted by the process of Step S704 shown in Fig. 17.

In Fig. 18, the difference in color for each machined portion is represented by the density of dot patterns. The cutting resistance received by the cutting tool 111 is smaller when the density of the dot pattern is lower, and larger when the density of the dot pattern is higher.

In the example shown in Fig. 18, the codes written in the machining program PP are displayed below the three-dimensional image that expresses cutting resistance. The operator uses the inputter 124, such as a pointing device, to position the cursor C1 at a desired code and clicks the pointing device. When the pointing device is clicked, the renderer 121C displays in a highlighted manner the machined portion that has been machined according to the procedure indicated by the cursor C1. In Fig. 18, the shaded region surrounded by two-dot chain lines in the three-dimensional image represents a portion machined using the selected code, and is displayed in a highlighted manner.

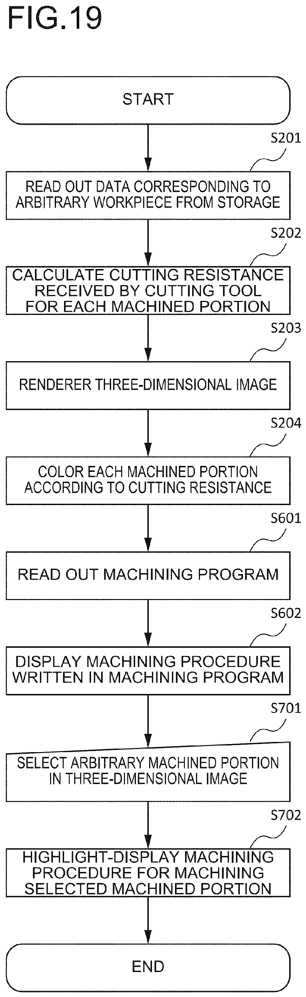

Fig. 19 is a flowchart showing an example of the processing performed by the visualizer 120. The flowchart shown in Fig. 19 relates to the process performed when the machining program PP is displayed along with a three-dimensional image that represents cutting resistance, and the process performed when an arbitrary machined portion in the three-dimensional image is selected. The processes from Step S201 to Step S204 in Fig. 19 are similar to those from Step S201 to Step S204 shown in Fig. 8. The processes of Step S601 and Step S602 in Fig. 19 are similar to those of Step S601 and Step S602 in Fig. 17.

The cutting resistance calculator 121B reads out the position data LD, the first load current data LC1, and the second load current data LC2 corresponding to the workpiece selected by the operator from the storage 127 (Step S201).

Next, the cutting resistance calculator 121B calculates the cutting resistance received by the cutting tool 111 for each machined portion (Step S202).

Next, the renderer 121C renders a three-dimensional image showing the shape of the workpiece selected by the operator (Step S203).

Next, the renderer 121C colors the three-dimensional image rendered in Step S203 for each machined portion on the basis of the cutting resistance received by the numerical control machine tool 110 (Step S204).

Next, the machining program display processor 121D reads out the machining program PP from the storage 127 (Step S601), and displays the codes written in the machining program PP on the display 125 (Step S602).

For example, the operator can select an arbitrary machined portion in the three-dimensional image, using the inputter 124.

When an arbitrary machined portion is selected (Step S701), the machining program display processor 121D displays in a highlighted manner the code for machining the selected machined portion (Step S702).

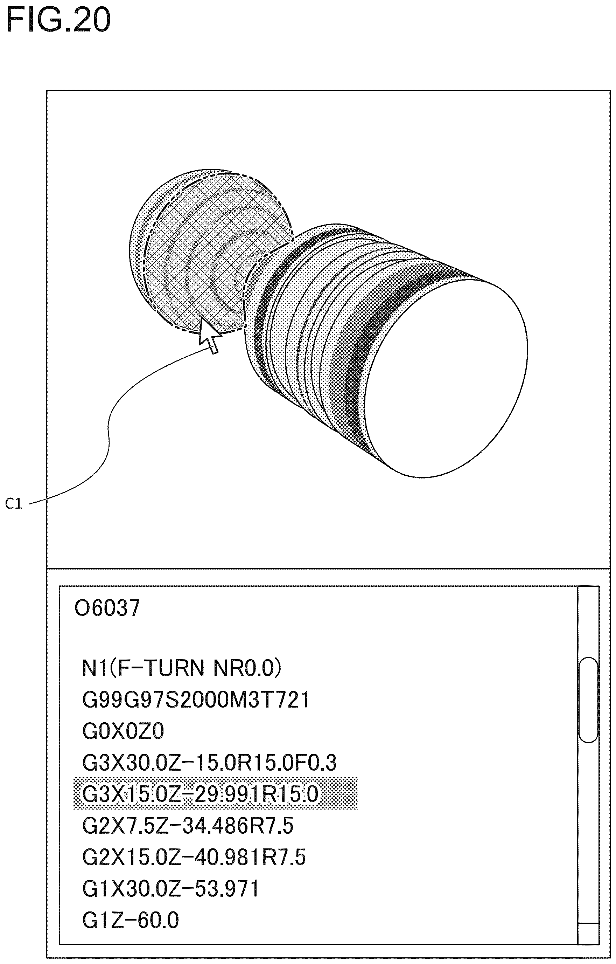

Fig. 20 is a diagram showing an example of a code being highlighted by the process of Step S702 shown in Fig. 19.

In Fig. 20, the difference in color for each machined portion is represented by the density of dot patterns. The cutting resistance received by the cutting tool 111 is smaller when the density of the dot pattern is lower, and larger when the density of the dot pattern is higher.

In the example shown in Fig. 20, the codes written in the machining program PP are displayed below the three-dimensional image that expresses cutting resistance. The operator uses the inputter 124, such as a pointing device, to position the cursor C1 at a desired machined portion and clicks the pointing device. When the pointing device is clicked, the machining program display processor 121D displays in a highlighted manner the code for machining the machined portion indicated by the cursor C1. In Fig. 20, the portion of the code in the machining program PP with a dotted background indicates that the code for machining the selected machined portion is highlighted.

As described above, the visualizer 120 in the above embodiment is a device that visualizes the machining status of a workpiece. The visualizer 120 includes the data acquirer 121A that acquires data from the numerical control machine tool 110. The visualizer 120 includes the renderer 121C that renders an image showing the shape of the workpiece and displays it on the display 125. The data acquirer 121A acquires position data LD that enables identification of the position of the cutting tool 111 when cutting is being performed. The data acquirer 121A acquires first load current data LC1 indicating the load current of the feed axis motor 112 and second load current data LC2 indicating the load current of the spindle motor 113 when cutting is being performed. The renderer 121C renders the image on the basis of the position data LD. The renderer 121C varies the display mode in the image between a first machined portion and a second machined portion where the cutting resistance received by the cutting tool 111, estimated on the basis of the first load current data LC1 and the second load current data LC2, differs. According to the present embodiment, the operator can understand the cutting resistance received by the cutting tool 111 for each machined portion of a workpiece based on the display mode of the rendered image.

The renderer 121C in the above embodiment varies the color in the image between the first machined portion and the second machined portion where the cutting resistance received by the cutting tool 111 differs. According to the present embodiment, the operator can understand the cutting resistance received by the cutting tool 111 for each machined portion of a workpiece based on the color of the rendered image.

The renderer 121C varies the display mode in the image between the first machined portion and the second machined portion where the component force of the cutting resistance received by the cutting tool 111 differs. According to the present embodiment, the operator can understand the component force of the cutting resistance for each machined portion of a workpiece based on the color of the rendered image.

The renderer 121C in the above embodiment renders a two-dimensional image showing the shape of the workpiece in response to a change in the status of cutting machining. According to the present embodiment, the operator can understand the cutting resistance received by the cutting tool 111 for each machined portion of a workpiece almost in real time while machining.

The operator in the above embodiment can set a frequency resolution for rendering a two-dimensional image. The renderer 121C renders a two-dimensional image at the set frequency resolution. The renderer 121C varies the display mode in the image on the basis of the cutting resistance in a period corresponding to the set frequency resolution. According to the present embodiment, even with a high sampling frequency for data acquisition, the operator can understand the cutting resistance received by the cutting tool 1112 for each machined portion on a workpiece by setting a desired frequency resolution.

The visualizer 120 in the above embodiment includes the storage 127 that stores position data LD acquired by the data acquirer 121A. The renderer 121C reads out position data LD stored in the storage 127 and renders a three-dimensional image showing the shape of the workpiece. According to the present embodiment, the operator can three-dimensionally understand the cutting resistance received by the cutting tool 111 for each machined portion of a workpiece.

The renderer 121C in the above embodiment renders a first image showing the shape of a reference workpiece machined after changing the cutting tool 111 and a second image showing the shape of a comparison-target workpiece. The renderer 121C varies the display mode in the second image on the basis of the relative value of the cutting resistance at the time of machining the comparison-target workpiece with respect to the cutting resistance at the time of machining the reference workpiece. According to the present embodiment, the operator can relatively understand the cutting resistance for each machined portion at the time of machining the comparison-target workpiece, with respect to the cutting resistance at the time of machining the reference workpiece, on the basis of the display mode of the second image.

The operator in the above embodiment can set a threshold value for expressing the cutting resistance. When the threshold value is set, the renderer 121C varies the display mode in the second image for the machined portion where the relative value is equal to or greater than the threshold value. According to the present embodiment, even in a case where the difference in cutting resistance received by the cutting tool 111 is difficult to discern for each machined portion of the workpiece, the operator can easily understand them by setting a threshold value.

The operator in the above embodiment can set a resolution span for expressing the cutting resistance. When a resolution span is set, the renderer 121C varies the display mode in the image using the resolution span that has been set. According to the present embodiment, even in a case where the difference in cutting resistance received by the cutting tool 111 is difficult to discern for each portion of the workpiece, the operator can easily understand them by setting a resolution span.

The visualizer 120 in the above embodiment includes the machining program display processor 121D that causes the display 125 to display the machining program PP in which codes are written for causing the numerical control machine tool 110 to perform machining. The operator can select an arbitrary code from the codes written in the machining program PP displayed on the display 125. When an arbitrary code is selected, the renderer 121C displays in a highlighted manner the machined portion machined by the selected code. According to the present embodiment, the operator can understand the cutting resistance received by the cutting tool 111 for the machined portion that corresponds to a desired code in the machining program PP.

The visualizer 120 in the above embodiment includes the machining program display processor 121D that causes the display 125 to display the machining program PP in which codes are written for causing the numerical control machine tool 110 to perform machining. The operator can select an arbitrary machined portion in the image. When an arbitrary machined portion is selected, the machining program display processor 121D displays in a highlighted manner the code for machining the selected machined portion. According to the present embodiment, the operator can check the code with respect to a desired machined portion.

The cutting machining system 100 in the above embodiment is a system that includes a machine tool that machines a workpiece. The cutting machining system 100 includes the numerical control machine tool 110 that machines a workpiece. The cutting machining system 100 includes the visualizer 120 that visualizes the machining status of the workpiece. The visualizer 120 includes the data acquirer 121A that acquires data from the numerical control machine tool 110. The visualizer 120 includes the renderer 121C that renders an image showing the shape of the workpiece and displays it on the display 125. The data acquirer 121A acquires position data LD that enables identification of the position of the cutting tool 111 when cutting is being performed. The data acquirer 121A acquires first load current data LC1 indicating the load current of the feed axis motor 112 and second load current data LC2 indicating the load current of the spindle motor 113 when cutting is being performed. The renderer 121C renders the image on the basis of the position data LD.

The renderer 121C varies the display mode in the image between a first machined portion and a second machined portion where the cutting resistance received by the cutting tool 111, estimated on the basis of the first load current data LC1 and the second load current data LC2, differs. According to the present embodiment, the operator can understand the cutting resistance received by the cutting tool 111 for each machined portion of a workpiece based on the display mode of the rendered image.

The visualization method in the above embodiment is a method for visualizing the machining status of a workpiece. The visualization method includes acquiring data from the numerical control machine tool 110. The visualization method includes rendering an image showing the shape of the workpiece and displays it on the display 125. In the visualization method, position data LD that enables identification of the position of the cutting tool 111 when cutting is being performed is acquired. In the visualization method, first load current data LC1 indicating the load current of the feed axis motor 112 and second load current data LC2 indicating the load current of the spindle motor 113 when cutting is being performed, are acquired. In the visualization method, the image is rendered on the basis of the position data LD. In the visualization method, the display mode is varied in the image between a first machined portion and a second machined portion where the cutting resistance received by the cutting tool 111, estimated on the basis of the first load current data LC1 and the second load current data LC2, differs. According to the present embodiment, the operator can understand the cutting resistance received by the cutting tool 111 for each machined portion of a workpiece based on the display mode of the rendered image.

The visualization program VP in the above embodiment is a program that causes a computer to function as the visualizer 120 that visualizes the machining status of a workpiece. The visualization program VP causes the computer to function as the data acquirer 121A that acquires data from the numerical control machine tool 110. The visualization program VP causes the computer to function as the renderer 121C that renders an image showing the shape of a workpiece and displays it on the display 125. The data acquirer 121A acquires position data LD that enables identification of the position of the cutting tool 111 when cutting is being performed. The data acquirer 121A acquires first load current data LC1 indicating the feed axis motor 112 and second load current data LC2, which is the load current of the spindle motor 113 when cutting is being performed. The renderer 121C renders the image on the basis of the position data LD. The renderer 121C varies the display mode in the image between a first machined portion and a second machined portion where the cutting resistance received by the cutting tool 111, estimated on the basis of the first load current data LC1 and the second load current data LC2, differs. According to the present embodiment, the operator can understand the cutting resistance received by the cutting tool 111 for each machined portion of a workpiece based on the display mode of the rendered image.

The present invention has been described through the above embodiment. However, the technical scope of the invention is not limited to the description of the above embodiment. It is apparent to those skilled in the art that various modifications or improvements can be added to the above embodiment. Also, matters described with respect to a specific embodiment can be applied to other embodiments as long as they are not technically inconsistent. It is also apparent from the scope of claims that the present invention also encompasses one or more of such modifications or improvements.

For example, the above embodiment uses the cutting machining system 100, which performs cutting machining on a workpiece and visualizes the machining status, as an example of a machining system. However, the machining system is not limited to the cutting machining system 100. The machining system may be a system that performs grinding machining on a workpiece and visualizes the machining status.

For example, the above embodiment takes the cutting tool 111 as an example of a tool. However, the tool is not limited to the cutting tool 111. For example, if the machining system is a grinding machining system, the tool may be a sensor-equipped grinding wheel.

For example, the above embodiment gives an example of changing the color in the image as a way to vary the display mode in the image. However, varying the display mode in the image is not limited to changing the color in the image. For example, the renderer 121C may vary the brightness in the image between the first machined portion and the second machined portion where the cutting resistance received by the cutting tool 111 differs. For example, the renderer 121C may vary the saturation in the image between the first machined portion and the second machined portion where the cutting resistance received by the cutting tool 111 differs.

For example, the embodiment described above provides an example of coloring machined portions where the relative value of the second cutting resistance with respect to the first cutting resistance is equal to or greater than a threshold value, when a threshold value for expressing cutting resistance is set. However, the process performed when a threshold value for expressing cutting resistance is set is not limited to coloring machined portions where the relative value of the second cutting resistance with respect to the first cutting resistance is equal to or greater than the threshold value. For example, when a threshold value is set for expressing cutting resistance, the renderer 121C may color the machined portions where the relative value of the second cutting resistance with respect to the first cutting resistance is equal to or less than the threshold value. For example, when a threshold value is set for expressing cutting resistance, the renderer 121C may color the machined portions where the relative value of the second cutting resistance with respect to the first cutting resistance is less than the threshold value.

When a reference is made to the execution order of the processes such as operations, procedures, and steps in the apparatus, the system, the program, and the method shown in the claims, specification, and drawings, wording such as "before" or "prior to" is not explicitly used. Also, it should be noted that the processes may be executed in any order unless an output of a particular process is used by the following process. In the claims, specification and drawings, a flow of operations may be described by using the terms such as "first" and "next" for the sake of convenience. This, however, does not necessarily mean that the operations must be performed in the described order. In addition, the disclosure of Japanese Patent Application No. 2023-107419 is incorporated herein by reference to the extent permitted by law.

### Description of Reference Signs

- 100:: Cutting machining system
- 110:: Numerical control machine tool
- 111:: Cutting tool
- 112:: Feed axis motor
- 113:: Spindle motor
- 120:: Visualizer
- 121:: Central processor
- 121A:: Data acquirer
- 121B:: Cutting resistance calculator
- 121C:: Renderer
- 121D:: Machining program display processor
- 122:: Main memory
- 123:: Input/output interface
- 124:: Inputter
- 125:: Display
- 126:: Communicator
- 127:: Storage
- C1:: Cursor
- DP:: Diagonal portion
- GP:: Groove portion
- I1:: Indicator
- IF1:: First display region
- IF2:: Second display region
- LC1:: First load current data
- LC2:: Second load current data
- LD:: Position data
- N1:: Network
- PP:: Machining program
- SP:: Spherical portion
- VP:: Visualization program

## Claims

1. A visualizer that visualizes a machining status of a workpiece, comprising
a data acquirer that acquires data from a machine tool, and
a renderer that renders an image showing a shape of the workpiece and displays it on a display device,
wherein the data acquirer acquires first data that enables identification of a position of a tool during machining, and second data that indicates load currents of a feed axis motor and a spindle motor during machining, and
wherein the renderer
renders the image on the basis of the first data, and
varies a display mode in the image between a first machined portion and a second machined portion where cutting resistance received by the tool, estimated on the basis of the second data, differs.

2. The visualizer according to claim 1,
wherein the renderer varies a color in the image between a first machined portion and a second machined portion where the cutting resistance differs.

3. The visualizer according to claim 1,
wherein the renderer varies the display mode in the image between a first machined portion and a second machined portion where a component force of the cutting resistance differs.

4. The visualizer according to claim 1,
wherein the renderer renders a two-dimensional image showing a shape of the workpiece in response to a change in machining status.

5. The visualizer according to claim 5,
wherein it is possible to set a frequency resolution for rendering the two-dimensional image, and
wherein the renderer
renders the two-dimensional image at a set frequency resolution, and
varies the display mode in the image on the basis of the cutting resistance in a period corresponding to the set frequency resolution.

6. The visualizer according to claim 1, comprising
a memory storage that stores data acquired by the data acquirer,
wherein the renderer reads out data stored in the memory storage and renders a three-dimensional image showing a shape of the workpiece.

7. The visualizer according to claim 1,
wherein the renderer
renders a first image showing a shape of a reference workpiece machined after a tool change and a second image showing a shape of a comparison-target workpiece, and
varies the display mode in the second image on the basis of a relative value of the cutting resistance at a time of machining the comparison-target workpiece with respect to the cutting resistance at a time of machining the reference workpiece.

8. The visualizer according to claim 8,
wherein it is possible to set a threshold value for expressing the cutting resistance, and
wherein, when the threshold value is set, the renderer varies the display mode in the second image for a machined portion where the relative value is equal to or greater than the threshold value.

9. The visualizer according to claim 1,
wherein it is possible to set a resolution span for expressing the cutting resistance, and
wherein, when the resolution span is set, the renderer varies the display mode in the image using the resolution span that has been set.

10. The visualizer according to claim 1, comprising
a machining program display processor that causes the display device to display a machining program in which codes are written for causing the machine tool to perform machining,
wherein it is possible to select an arbitrary code from the codes written in the machining program displayed on the display device, and
wherein, when the arbitrary code is selected, the renderer displays in a highlighted manner a machined portion machined by the selected code.

11. The visualizer according to claim 1, comprising
a machining program display processor that causes the display device to display a machining program in which codes are written for causing the machine tool to perform machining,
wherein it is possible to select an arbitrary machined portion in the image, and
wherein, when the arbitrary machined portion is selected, the machining program display processor displays in a highlighted manner a code for machining the selected machined portion.

12. A machining system including a machine tool that machines a workpiece, comprising
a machine tool that machines a workpiece, and
a visualizer that visualizes a machining status of the workpiece,
wherein the visualizer includes
a data acquirer that acquires data from the machine tool, and
a renderer that renders an image showing a shape of the workpiece and displays it on a display device,
wherein the data acquirer acquires first data that enables identification of a position of a tool during machining, and second data that indicates load currents of a feed axis motor and a spindle motor during machining, and
wherein the renderer
renders the image on the basis of the first data, and
varies a display mode in the image between a first machined portion and a second machined portion where cutting resistance received by the tool, estimated on the basis of the second data, differs.

13. A visualization method for visualizing a machining status of a workpiece, comprising
acquiring data from a machine tool, and
rendering an image showing a shape of the workpiece and displaying it on a display device,
wherein first data that enables identification of a position of a tool during machining, and second data that indicates load currents of a feed axis motor and a spindle motor during machining are acquired, and
wherein the image on the basis of the first data is rendered, and
wherein a display mode is varied in the image between a first machined portion and a second machined portion where cutting resistance received by the tool, estimated on the basis of the second data, differs.

14. A visualization program causing a computer to function as a visualizer that visualizes a machining status of a workpiece,
wherein a computer is caused to function as
a data acquirer that acquires data from a machine tool, and
a renderer that renders an image showing a shape of the workpiece and displays it on a display device,
wherein the data acquirer acquires first data that enables identification of a position of a tool during machining, and second data that indicates load currents of a feed axis motor and a spindle motor during machining, and
wherein the renderer
renders the image on the basis of the first data, and
varies a display mode in the image between a first machined portion and a second machined portion where cutting resistance received by the tool, estimated on the basis of the second data, differs.
